# EUROPEAN PATENT SPECIFICATION

(11) **EP 3 373 205 B1**
(45) Date of publication and mention of the grant of the patent: **23.12.2020**
(21) Application number: 17160180.0
(22) Date of filing: 09.03.2017
(51) Int. Cl.: G06K 15/00

(54) **IMAGE FORMING APPARATUS**
BILD BILDENDER APPARAT
APPAREIL DE FORMATION IMAGE

(43) Date of publication of application: 12.09.2018
(73) Proprietor: Ricoh Company, Ltd., Tokyo 143-8555 (JP)
(72) Inventor: RAVEL, Christian, Staines upon Thames, Surrey TW18 3BA (GB); BEYLOT, Loic, Staines upon Thames, Surrey TW18 3BA (GB); HIRAKAWA, Takahiro, Staines upon Thames, Surrey TW18 3BA (GB)
(74) Representative: J A Kemp LLP

(56) References cited:
- EP-A2- 0 657 845
- EP-A2- 1 806 651
- US-A1- 2006 285 148
- US-A1- 2012 084 606

## Description

The present invention relates to an image forming apparatus adapted to assist use by visually impaired users. In particular the present invention is concerned with the action taken by the image forming apparatus if an error occurs.

Image forming apparatuses such as printers, copiers, fax machines or multifunction peripherals (MFPs) that alert a user to an error, e.g. a paper jam, so that the user can resolve the error or request assistance to resolve the error, are known. There are various ways in which such information is communicated, e.g. by sound or speech.

However, there are circumstances in which the user may not want information to be communicated to him or her directly, for example if the information relates to confidential or sensitive material. For example, if an error occurs while printing such a document, for example a paper jam, the user might not want information about the error to be communicated via speech just in case it is heard by someone else who is unauthorised to have access to that document and who might attempt to resolve the error and see the printed document. Also, if for example the user forgets to remove a printed document from the printer the user might not want this error communicated via speech for the same reason. However, for a visually impaired user, an error should be communicated in a different way to ensure that it is fixed promptly to reduce the chance of an unauthorised person seeing a confidential document.

The present invention aims to at least partially address some of the problems discussed above.

EP 1 806 651 A2 and US 2006/0285148 A1 disclose image forming apparatuses wherein a document for printing can be set as confidential. EP 1 806 651 A2 is regarded closest to the present invention.

The invention is defined by the appended claims.

Further features and advantages of the invention will be described below with reference to exemplary embodiments and the accompanying drawings, in which:
Figure 1 is a schematic drawing of a system according to an embodiment of the invention;
Figure 2 is a hardware block diagram related to the embodiment shown in Fig 1;
Figure 3 is a software block diagram in accordance with an embodiment of the invention;
Figures 4A and 4B show examples of confidential documents;
Figure 5 is a flow chart showing an exemplary process according to the present invention.

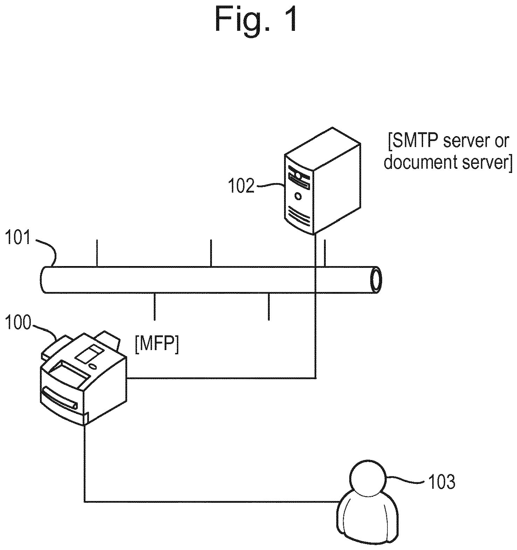

A system according to an embodiment of the invention is depicted in Figure 1. Image forming apparatus 100 is connected to a server 102 via a network 101. The image forming apparatus 101 is in the form of a multifunction peripheral (MFP). The server 102 is, for example, a document server for storing files or an SMTP server for sending email. The network 101 may be a conventional LAN or WLAN, or the Internet. A user 103 operates the image forming apparatus 100.

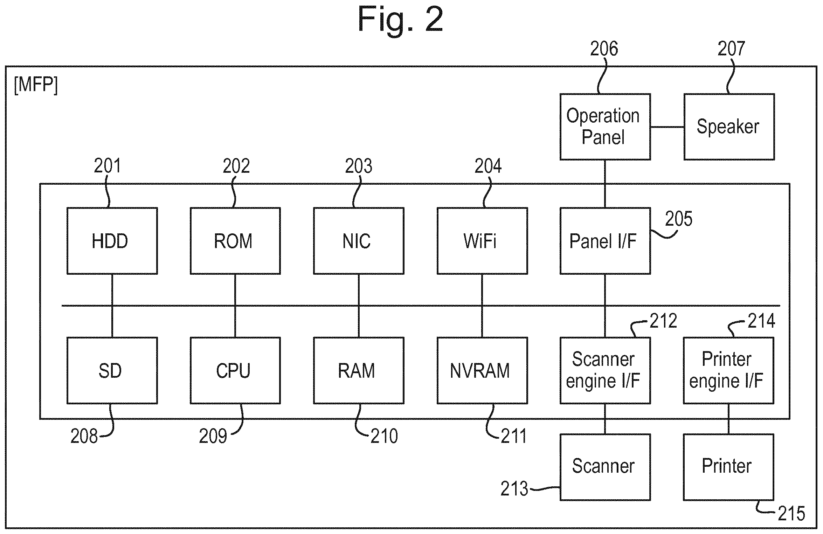

Figure 2 depicts a hardware block diagram of the image forming apparatus 101. The image processing apparatus 100 comprises a hard disc drive 201 for storing applications and configuration data; ROM 202; a network interface controller (NIC) 203 for communicating with the server 102 via the network 101; a Wi-Fi card 204 for connecting wirelessly with the network 101 or other devices; an operation panel interface 205 and an operation panel 206, which allow the user 103 to interact with and pass instructions to the image forming apparatus 100; a speaker 207, which allows the user 103 to hear playback of the speech data at the image forming apparatus 100; an SD drive 208; a CPU 209 for carrying out instructions; RAM 210; NVRAM 211; a scanner engine interface 212 and scanner unit 213 for scanning a paper document; and a printer engine interface 214 and a printer unit 215 for printing a document.

The image forming apparatus 100 is for forming an image on a recording medium based on document data according to the invention. The recording medium is not limited to any particular recording medium. The recording medium could be paper, card, envelopes, or OHP for example. The method of image formation is not limited to any particular method. For example, the method of image formation could be an inkjet printing method or a laser printing method. The printing may be performed by a printing unit (printer) 215. The document data may be transferred to the image forming apparatus 100 over the network 101 from a client device, such as a personal computer. Alternatively, the document data may be transferred to the image forming apparatus 100 in another way, for example via a portable storage device, such as an SD memory card or USB memory device. The apparatus may include a user interface, such as operation panel 206, for the user 103 to control the apparatus 100.

The image forming apparatus 100 may comprise a document reading unit (scanner) 213 for reading a document to acquire the document data. In this case, it is not necessary that the document data actually be printed, for example, the image forming apparatus could be used in a mode whereby a previously read document is stored on a server or transmitted via email or facsimile. The document reading unit 213 may be of the conveyance type, where an original document is fed into the reading unit 213. Alternatively, the document reading unit 213 may be of the flat-bed type where an original document is placed on a scanning surface.

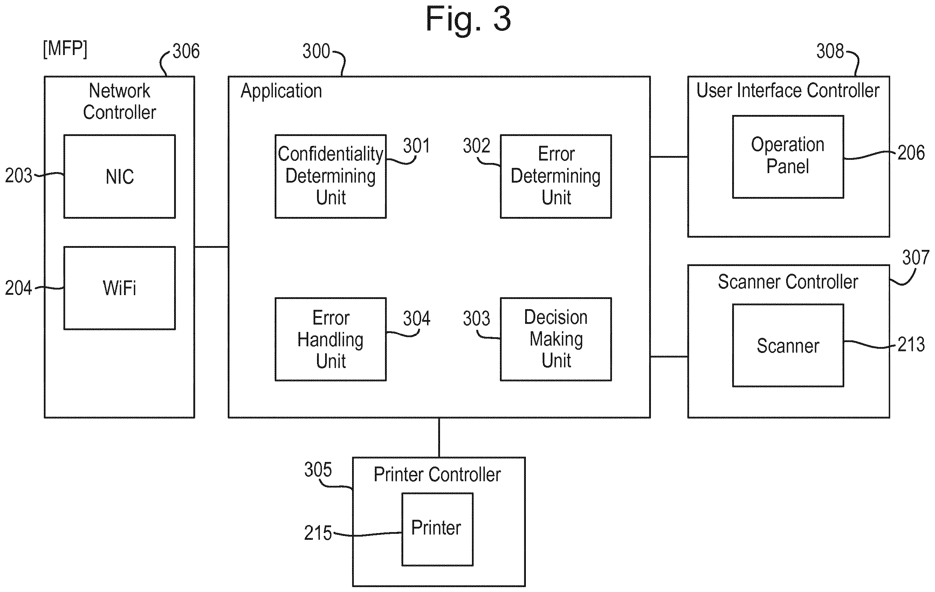

Figure 3 depicts a software module block diagram of the image forming apparatus 100. The image forming apparatus 100 comprises an application 300. The application 300 may be in communication with a network controller 306 for controlling network communications, e.g. via the NIC 203 and WiFi card 204, a printer controller 305 for controlling the printing unit (printer) 215, a scanner controller for controlling the image reading unit (scanner) 213 and a user interface controller 308 for controlling the user interface 206.

The application 300 comprises a confidentiality determining unit 301 for determining whether the document data is confidential.

Optionally, the confidentiality determining unit 301 may determine whether the document data is confidential based on whether or not the document data includes data corresponding to a character string (e.g. the word "CONFIDENTIAL" indicating that the document data is confidential. The character string may be determined based on performing optical character recognition (OCR) on the document data. The character string may be a character string in the document name of the document data, the document, or a watermark detected by the confidentiality determining unit 301. The confidentiality determining unit 301 may perform the OCR process on all or part of the document data. For example, only the first page may be subject to the OCR process. Alternatively, only parts of a page may be subject to the OCR process, e.g. a top part and/or bottom part of a page. This improves processing speed. If a document contains multiple pages, the OCR process may be performed on a previous page while a current page is being read by a document reading unit 213. In the case of document data obtained by the document reading unit 213, the confidentiality determining unit 301 can only asses the confidentiality of a document to the extent that document data has been obtained. For example, if a paper jam occurs in feeding the second page of an original multi-page document into the document reading unit 213, then the confidentiality determining unit 301 can only determine the confidentiality on the basis of the first page, which has been read.

The text obtained by the OCR process may be analysed to identify specific pre-determined character strings which are known to indicate confidential document data. The pre-determined character strings may be stored in the confidentiality determining unit 301 in a list or database. The text obtained by the OCR process may, alternatively or additionally, be analysed to identify character strings with specific pre-determined patterns, which are known to indicate potentially confidential information, e.g. a sixteen digit number may indicate a credit card number. The confidentiality determining unit 301 may use a combination of identifying specific character strings and specific patterns to determine whether a document is confidential more reliably. For example, if the document includes a sixteen digit number and the character string "credit card" it is more likely that the sixteen digit number does correspond to a credit card number rather than some other number which might not be confidential.

In order to improve the reliability of the determination of confidentiality, the confidentiality determining unit 301 may make the determination based on the frequency of the pre-determined character strings. This may be the frequency that the same character string occurs, e.g. the string "confidential", or the frequency at which character strings within a group of different character strings occurs e.g. the group comprising "confidential", "private" and "sensitive".

The confidentiality determining unit 301 may also consider information about the user in making this determination, e.g. whether the user is part of a predefined group of users. For example certain text strings might be more likely to be associated with confidential data for certain users than others. For example, the term "redundancy" is more likely to be associated with confidential information for a human resource worker than a software engineer.

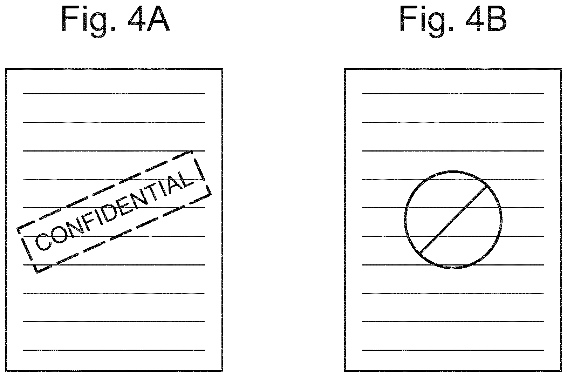

Optionally, the confidentiality determining unit 301 may be configured to determine whether the document data is confidential based on whether or not the document data includes data corresponding to a watermark indicating that the document data is confidential. For example, the confidentiality determining unit 301 may include software capable of recognising a watermark from the document data. Some documents may be watermarked with characters e.g. "confidential", as shown in Figure 4A. The confidentiality determining unit 301 can determine confidentiality on the basis of these characters as above. Alternatively or additionally, the confidentiality determining unit 301 may be capable of determining whether a watermark includes a particular image indicative of confidentiality (as shown in Figure 4B), e.g. by comparing the watermark image to a database of images known to be indicative of confidential or sensitive information.

Optionally, the confidentiality determining unit 301 may determine that a document is confidential based on settings associated with the document data specified by a user, e.g. the user may select a print job type which indicates that the document is confidential.

Optionally, the confidentiality determining unit 301 may determine that a document is confidential based on the time and/or date at which the determination is made. For example, document data might be more likely to be confidential if it is being used at a particular time, e.g. a period near the end of an accounting year, or during an audit. Particular times and dates can be pre-stored in the memory of the image forming apparatus 100 as times at which documents are more likely to be confidential. The confidentiality determining unit 301 can then compare the date and/or time to the pre-stored dates and times in order to make a determination.

Optionally, the confidentiality determining unit 301 may determine that a document is confidential based on the location of the image forming apparatus 100. For example, image forming apparatuses 100 at particular locations might be more likely to be used for confidential information, e.g. image forming apparatuses 100 in accounting departments or human resource departments. Particular locations can be pre-stored in the memory of the image forming apparatus 100 as locations at which documents are more likely to be confidential. The confidentiality determining unit 301 can then compare the location to the pre-stored locations in order to make a determination.

Optionally, the confidentiality determining unit 301 may determine that a document is confidential based on whether the user is part of a predefined group of users. For example, particular users might be more likely to work with confidential information, e.g. account managers or human resource employees. Particular users or user groups can be pre-stored in the memory of the image forming apparatus 100 as users or user groups for whom documents are more likely to be confidential. The confidentiality determining unit 301 can then compare the user to the pre-stored users or user groups in order to make a determination.

The confidentiality determining unit 301 may determine the level of confidentiality of the document data based on a plurality of predetermined confidentiality levels, e.g. not confidential, low confidentiality, medium confidentiality and high confidentiality.

If multiple documents are scanned, copied or printed at the same time, the documents may be treated as a single document. Therefore, if only one of the documents is confidential, they will all be treated as confidential.

The confidentiality determining unit 301 may verify with the user 103 that the documents are confidential. If the documents are determined as confidential by the confidentiality determining unit 301, but they are not in fact confidential, the user 103 may over-ride the confidentiality determining unit 301.

The application 300 further comprises an error determining unit 302 for determining an error by the image forming apparatus 100 or a user of the image forming apparatus 100, e.g. determining that an error has occurred and what the error is. The error determining unit 302 may gather information from the printer controller 305, the network controller 306, the scanner controller 307 and the user interface controller 308, for example.

Optionally, the error may be an error in the conveyance of the recording medium in the apparatus 100. The error determining unit 302 may be capable of determining when an error in the conveyance of the recording medium in the apparatus 100 occurs, for example, a paper jam.

Optionally, the error may be a failure to remove a document read by the document reading unit 213 from the apparatus 100. The error determining unit 302 may be configured to determine a failure to remove a read document from the apparatus 100 if a predetermined time has elapsed from forming an image on the recording medium or reading the document.

If the document reading unit 213 is of the conveyance type, where an original document is fed into the reading unit 213, the error may be an error in the conveyance of a document read by the document reading unit 213. In other words, the error determining unit 302 may be capable of determining when an error in the conveyance of the document to be read by the document reading unit occurs, for example, a paper jam.

Optionally, the error may be failure to remove a recording medium on which an image has been formed from the apparatus 100. The error determining unit 302 may be configured to determine a failure to remove a recording medium from the apparatus 100 if a predetermined time has elapsed from forming an image on the recording medium.

The error determining unit 302 may determine the type of the error based on a plurality of predetermined error types. For example, each of the errors described above might be categorised into one or more of a plurality of predefined error types. The error types may be classified as errors that can be fixed by the user or errors that require assistance from a third party. For example, errors in conveyance of documents or recording media may be more likely to require assistance, whereas failure to remove scanned documents or recording media on which an image has been formed from the image forming apparatus 100 may be more likely to be fixable by the user.

Optionally, the error determining unit 302 may determine the type of the error based on whether the user is part of a predefined group of users. For example, particular users might be more likely to require assistance, e.g. visual impaired users. Particular users or user groups can be pre-stored in the memory of the image forming apparatus 100 as users or user groups more likely to require assistance. The error determining unit 302 can then compare the user to the pre-stored users or user groups in order to make a determination.

The application 300 further comprises a decision making unit 303 for deciding on an action to be taken based on the determination of the error determining unit 302 and confidentiality determining unit 301. The decision making unit 303 takes the output of the error determining unit 302 and the output of the confidentiality determining unit 301 as inputs. The decision making unit 303 may additionally take as input, information about the user, date and/or time information, information about the location of the image forming apparatus 100. The decision making unit 303 outputs a decision regarding an action to be taken based on the inputs.

The application 300 further comprises an error handling unit 304 for implementing one or more actions in response to a decision by the decision making unit 303. The error handling unit 304 may instruct suitable hardware modules of the image forming apparatus 100 to perform the action decided by the decision making unit 303. For example, the error handling unit may instruct the printer controller 305, the network controller 306, the scanner controller 307 and the user interface controller 308.

The decision making unit 303 may decide to communicate information about the error to the user and/or a third party. The information may comprise a notification that an error has occurred. Alternatively or additionally, the information may comprise a request for assistance in fixing the error, e.g. if the error is of the type that requires assistance.

The communication to the user may be by speech and/or electronic messaging (e.g. SMS or email). The communication to the third party may be by electronic messaging.

Speech may be communicated via the speaker 207. The speech may be communicated via an external audio device connected to the image forming apparatus 100 by, for example a phone port, for connecting to headphones or a wireless communication device (e.g. a Bluetooth™ device) for connecting wirelessly to a headset or phone. The image forming apparatus 100 may comprise a text-to-speech module, e.g. GoogleTalk™, for converting input text data to speech data. Speech data may be pre-stored in the memory of the image forming apparatus 100. Speech data may be output by the loudspeaker 207 and/or headphones as sound, namely speech.

The decision making unit 303 may decide to communicate the information by speech dependent on whether or not it is determined that the document data is confidential. In this way, potentially sensitive information is not communicated audibly.

If it is determined by the confidentiality determining unit 301, that the document data is not confidential, the decision making unit 303 may decide to communicate information about the error by speech, but if it is determined that the document data is confidential, the information may not be communicated by speech. Instead of communicating the information about the error by speech no communication by speech may be made or, alternatively, information which actively deters people from attending to an error, for example, information noting that the apparatus 100 should not be used may be communicated by speech.

In the case that an external audio device is connected to the image forming apparatus 100 all information may be communicated via the external audio device rather than the loudspeaker. In that case, the image forming apparatus 100 may be configured to operate as if all data is not confidential, i.e. the determination is automatically made that the document data is not confidential. This is because with an external audio device connected, it is assumed that information will only be communicated to the user of the device and is not audible to others.

Information about the error may be communicated by electronic messaging to a designated address, e.g. the address of a selected third party, if the document data is confidential. This allows the error to be dealt with by someone who is authorised to access the potentially sensitive information. The third party may be selected based on the level of confidentiality of the document, e.g. certain personnel may have different security clearances and so be appropriately selected based on the confidentiality level of the document. The third party may be selected based on the user, or user group that the user belongs to, e.g. a third party working in the same department as the user. The third party may be selected based on particular text strings found in the document data, e.g. if the documents contains words indicating a content relevant to a particular department, e.g. accounting or human resources, an appropriate person in that department can be contacted.

The decision making unit 303 may decide to send information by electronic messaging to a designated address, e.g. the address of a selected third party and/or the user, if an attempt is made to fix the error. For example, in the case of a paper jam, the original user may be notified when a gate is opened to access the conveyance mechanism at which the paper jam is found.

According to the invention, the decision making unit 303 encrypts the document data based on the determination of the error determining unit 302 and the confidentiality determining unit 301. For example, if the error occurs in relation to confidential document data obtained by the document reading unit 213, the document data may be encrypted so that it cannot be used by unauthorised persons.

The decision making unit 303 may decide to prevent one or more operations performed by the image forming apparatus based on the determination by the error determining unit 302 and the confidentiality determining unit 301. The one or more operations may include document reading, image forming, and recoding medium or document conveyance. If the error occurs in relation to one of the above operations, and the document data is determined to be confidential, then that operation may be blocked. Alternatively the image forming apparatus 100 may be shut down, if an error occurs and the document data is determined to be confidential.

In order to restart any of the above operations, a pin-code may be required, and/or a specific user, e.g. the original user, or an authorised third party, may be required to log in to the image forming apparatus.

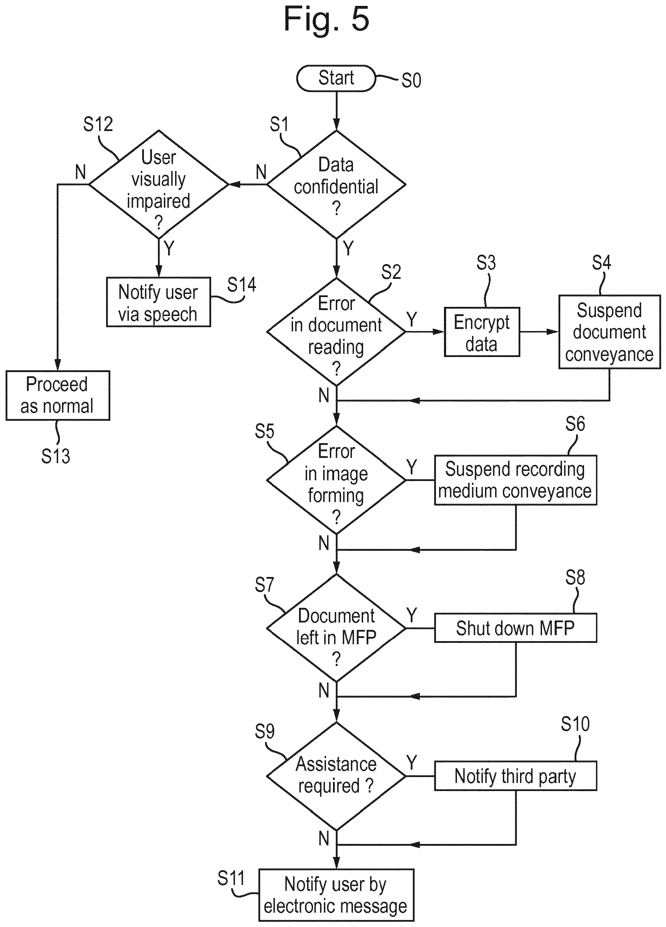

Figure 5 shows an example process performed by the decision making unit 303. The process starts at S0, e.g. when an error is detected by the error determining unit 302. At S1, the decision making unit 303 determines whether the document data is confidential, e.g. based on the input from the confidentiality determining unit 301. If the data is confidential, the decision making unit 303 determined more information about the error, e.g. from the error determining unit 303, in steps S2 to S9. In step S2, it is determined whether or not the error is in the document reading, in which case in steps S3 and S4, the decision making unit 303 decides to encrypt the document data and suspend conveyance of the document being read in the document reading unit 213. In step S5, it is determined whether or not the error is in the printing unit 215, i.e. an error with image forming, in which case in step S6, the decision making unit 303 decides to encrypt the document data and suspend recording medium conveyance. In step S7, it is determined whether or not the error is the user leaving a document in the image forming apparatus 100, e.g. in the document reading unit 213 or the output of the printing unit 215, in which case in step S8, the decision making unit 303 may decide to shut down the image forming apparatus 100, so that no one else can use it. In step S9, it is determined whether or not the error requires assistance to fix, in which case in steps S10, the decision making unit 303 may decide to notify a third party of the error and request assistance, e.g. by electronic message. In step S11, the decision making unit 303 may decide to notify the user of the error, e.g. by electronic message. If the document data is determined not to be confidential in step S1, the decision making unit 303 may determine whether the user is a visually impaired user, in which case, the error may be communicated to the user via speech in step S14. If the user is not a visually impaired user, the decision making unit 303 may decide to proceed with handling the error as normal in step S13, i.e. using known methods.

Variations of the above described embodiment are possible in light of the above teachings. It is to be understood that the invention may be practised otherwise than specifically described herein without departing from the scope of the invention as defined by the claims.

## Claims

1. An image forming apparatus for forming an image on a recording medium based on document data, the apparatus comprising:
a confidentiality determining unit configured for determining whether the document data is confidential;
an error determining unit configured for determining the occurrence of an error by the image forming apparatus or a user of the image forming apparatus;
a decision making unit configured for deciding on one or more actions to take based on the determination of the error determining unit and confidentiality determining unit;
an error handling unit configured for implementing the one or more actions decided by the decision making unit, and **characterised in that**:
the one or more actions includes encrypting the document data.

2. The image forming apparatus of claim 1, wherein the error determining unit determines the type of error based on a plurality of predetermined error types.

3. The image forming apparatus of claim 2 wherein the error type is classified as an error that can be fixed by the user or an error that requires assistance from a third party.

4. The image forming apparatus of any previous claim wherein the confidentiality determining unit determines the level of confidentiality of the document data based on a plurality of predetermined confidentiality levels.

5. The image forming apparatus of claim : 4, wherein the level of confidentiality is based on one or more of: a character string in the document data, a watermark in the document data, an image in the document data, a confidentiality level pre-set by a user, the time/date, the location of the image forming apparatus, whether the user is part of a predefined group of users.

6. The image forming apparatus of any previous claim wherein the one or more actions includes:
communicating information about the error to the user and/or a third party.

7. The image forming apparatus of claim 6, where the communication to the user is by speech and/or electronic messaging.

8. The image forming apparatus of claim 6 or 7, where the communication to the third party is by electronic messaging.

9. The image forming apparatus of any one of claims 6, 7 or 8 wherein the communication comprises a notification that an error has occurred.

10. The image forming apparatus of any one of claims 6 to 9, wherein the communication comprises a request for assistance in fixing the error.

11. The image forming apparatus of any previous claim, wherein the one or more actions includes preventing one or more operations performed by the image forming apparatus.

12. The image forming apparatus of claim 11, wherein the one or more operations include document reading, image forming, recoding medium or document conveyance.

13. A method of handling an error by an image forming apparatus or a user of the image forming apparatus, said image forming apparatus for forming an image on a recording medium based on document data, the method comprising:
determining whether the document data is confidential;
determining the occurrence of an error by the image forming apparatus or a user of the image forming apparatus;
deciding on one or more actions to be performed based on the determination of the error determining unit and confidentiality determining unit;
implementing the one or more actions; and **characterised in that**:
the one or more actions includes encrypting the document data.

14. A computer program product comprising instructions which when executed by a computer, cause the computer to carry out the steps of the method of claim 13.

## Patentansprüche

1. Bilderzeugungsvorrichtung zum Bilden eines Bildes auf einem Aufzeichnungsmedium auf Basis von Dokumentdaten, wobei die Vorrichtung Folgendes umfasst:
eine Vertraulichkeitsbestimmungseinheit, die dazu ausgelegt ist zu bestimmen, ob die Dokumentdaten vertraulich sind;
eine Fehlerbestimmungseinheit, die dazu ausgelegt ist, das Auftreten eines Fehlers bei der Bilderzeugungsvorrichtung oder einem Benutzer der Bilderzeugungsvorrichtung zu bestimmen;
eine Beschlussfassungseinheit, die dazu ausgelegt ist, auf Basis der Bestimmung der Fehlerbestimmungseinheit und der Vertraulichkeitsbestimmungseinheit eine oder mehrere zu ergreifende Maßnahmen zu beschließen;
eine Fehlerhandhabungseinheit, die dazu ausgelegt ist, die eine oder die mehreren Maßnahmen, die von der Beschlussfassungseinheit beschlossen werden, zu implementieren, und **dadurch gekennzeichnet, dass**:
die eine oder die mehreren Maßnahmen das Verschlüsseln der Dokumentdaten beinhalten.

2. Bilderzeugungsvorrichtung nach Anspruch 1, wobei die Fehlerbestimmungseinheit den Typ des Fehlers auf Basis einer Vielzahl von vorbestimmten Fehlertypen bestimmt.

3. Bilderzeugungsvorrichtung nach Anspruch 2, wobei der Fehlertyp als ein Fehler, der vom Benutzer behoben werden kann, oder ein Fehler, der die Unterstützung eines Drittanbieters erfordert, klassifiziert wird.

4. Bilderzeugungsvorrichtung nach einem der vorhergehenden Ansprüche, wobei die Vertraulichkeitsbestimmungseinheit die Stufe der Vertraulichkeit der Dokumentdaten auf Basis einer Vielzahl von vorbestimmten Vertraulichkeitsstufen bestimmt.

5. Bilderzeugungsvorrichtung nach Anspruch 4, wobei die Vertraulichkeitsstufe auf einem oder mehrerem von Folgendem basiert: einer Zeichenfolge in den Dokumentdaten, einem Wasserzeichen in den Dokumentdaten, einem Bild in den Dokumentdaten, einer vorab von einem Benutzer eingestellten Vertraulichkeitsstufe, der Zeit bzw. dem Datum, dem Standort der Bilderzeugungsvorrichtung, ob der Benutzer Teil einer vordefinierten Gruppe von Benutzern ist.

6. Bilderzeugungsvorrichtung nach einem der vorhergehenden Ansprüche, wobei die eine oder die mehreren Maßnahmen Folgendes beinhalten:
Kommunizieren von Informationen über den Fehler zum Benutzer und/oder zu einem Drittanbieter.

7. Bilderzeugungsvorrichtung nach Anspruch 6, wo die Kommunikation zum Benutzer mittels Sprache und/oder elektronischen Messagings erfolgt.

8. Bilderzeugungsvorrichtung nach Anspruch 6 oder 7, wo die Kommunikation zum Drittanbieter mittels elektronischen Messagings erfolgt.

9. Bilderzeugungsvorrichtung nach einem der Ansprüche 6, 7 oder 8, wobei die Kommunikation eine Benachrichtigung, dass ein Fehler aufgetreten ist, umfasst.

10. Bilderzeugungsvorrichtung nach einem der Ansprüche 6 bis 9, wobei die Kommunikation eine Anforderung der Unterstützung beim Beheben des Fehlers umfasst.

11. Bilderzeugungsvorrichtung nach einem der vorhergehenden Ansprüche, wobei die eine oder die mehreren Maßnahmen das Verhindern, dass die Bilderzeugungsvorrichtung eine oder mehrere Operationen durchführt, beinhalten.

12. Bilderzeugungsvorrichtung nach Anspruch 11, wobei die eine oder die mehreren Operationen Dokumentlesung, Medienneucodierung oder Dokumentübermittlung umfassen.

13. Verfahren zur Handhabung eines Fehlers einer Bilderzeugungsvorrichtung oder eines Benutzers der Bilderzeugungsvorrichtung, wobei die Bilderzeugungsvorrichtung dem Bilden eines Bildes auf einem Aufzeichnungsmedium auf Basis von Dokumentdaten dient, wobei das Verfahren Folgendes umfasst:
Bestimmen, ob die Dokumentdaten vertraulich sind;
Bestimmen des Auftretens eines Fehlers bei der Bilderzeugungsvorrichtung oder einem Benutzer der Bilderzeugungsvorrichtung;
Beschließen von einer oder mehreren Maßnahmen, die auf Basis der Bestimmung der Fehlerbestimmungseinheit und der Vertraulichkeitsbestimmungseinheit durchzuführen sind;
Implementieren der einen oder der mehreren Maßnahmen und **dadurch gekennzeichnet, dass**:
die eine oder die mehreren Maßnahmen das Verschlüsseln der Dokumentdaten beinhalten.

14. Computerprogrammprodukt, das Anweisungen umfasst, die, wenn sie von einem Computer ausgeführt werden, den Computer veranlassen, die Schritte des Verfahrens nach Anspruch 13 umzusetzen.

## Revendications

1. Appareil de formation d'image pour former une image sur un support d'enregistrement sur la base de données de document, l'appareil comprenant :
une unité de détermination de confidentialité configurée pour déterminer le fait que les données de document sont confidentielles ou non ;
une unité de détermination d'erreur configurée pour déterminer la survenue d'une erreur par l'appareil de formation d'image ou un utilisateur de l'appareil de formation d'image ;
une unité de prise de décision configurée pour prendre une décision en ce qui concerne une ou plusieurs actions à réaliser sur la base de la détermination de l'unité de détermination d'erreur et de l'unité de détermination de confidentialité ;
une unité de traitement d'erreur configurée pour mettre en œuvre les une ou plusieurs actions ayant fait l'objet d'une décision par l'unité de prise de décision, et **caractérisé en ce que** :
les une ou plusieurs actions incluent le chiffrement des données de document.

2. Appareil de formation d'image de la revendication 1, dans lequel l'unité de détermination d'erreur détermine le type d'erreur sur la base d'une pluralité de types d'erreur prédéterminés.

3. Appareil de formation d'image de la revendication 2, dans lequel le type d'erreur est classifié en tant qu'erreur qui peut être corrigée par l'utilisateur ou une erreur qui nécessite une assistance d'un tiers.

4. Appareil de formation d'image selon une quelconque revendication, dans lequel l'unité de détermination de confidentialité détermine le niveau de confidentialité des données de document sur la base d'une pluralité de niveaux de confidentialité prédéterminés.

5. Appareil de formation d'image de la revendication 4, dans lequel le niveau de confidentialité est sur la base d'un ou de plusieurs de : une chaîne de caractères dans les données de document, un tatouage numérique dans les données de document, une image dans les données de document, un niveau de confidentialité préétabli par un utilisateur, l'heure/la date, l'emplacement de l'appareil de formation d'image, le fait que l'utilisateur fait partie d'un groupe prédéfini d'utilisateurs ou non.

6. Appareil de formation d'image selon une quelconque revendication, dans lequel les une ou plusieurs actions incluent :
la communication d'informations concernant l'erreur à l'utilisateur et/ou un tiers.

7. Appareil de formation d'image de la revendication 6, où la communication à l'utilisateur est par parole et/ou messagerie électronique.

8. Appareil de formation d'image de la revendication 6 ou 7, où la communication au tiers est par messagerie électronique.

9. Appareil de formation d'image de l'une quelconque des revendications 6, 7 ou 8, dans lequel la communication comprend une notification qu'une erreur est survenue.

10. Appareil de formation d'image de l'une quelconque des revendications 6 à 9, dans lequel la communication comprend une demande d'assistance pour corriger l'erreur.

11. Appareil de formation d'image selon une quelconque revendication précédente, dans lequel les une ou plusieurs actions incluent la prévention d'une ou de plusieurs opérations réalisées par l'appareil de formation d'image.

12. Appareil de formation d'image de la revendication 11, dans lequel les une ou plusieurs opérations incluent la lecture de document, la formation d'image, le transport de support de recodage ou de document.

13. Procédé de traitement d'une erreur par un appareil de formation d'image ou un utilisateur de l'appareil de formation d'image, ledit appareil de formation d'image étant destiné à former une image sur un support d'enregistrement sur la base de données de document, le procédé comprenant :
la détermination du fait que les données de document sont confidentielles ou non ;
la détermination de la survenue d'une erreur par l'appareil de formation d'image ou un utilisateur de l'appareil de formation d'image ;
la prise d'une décision en ce qui concerne une ou plusieurs actions destinées à être réalisées sur la base de la détermination de l'unité de détermination d'erreur et de l'unité de détermination de confidentialité ;
la mise en œuvre des une ou plusieurs actions ; et **caractérisé en ce que** :
les une ou plusieurs actions incluent le chiffrement des données de document.

14. Produit programme d'ordinateur, comprenant des instructions qui, lorsqu'elles sont exécutées par un ordinateur, font en sorte que l'ordinateur réalise les étapes du procédé de la revendication 13.
